# EUROPÄISCHE PATENTSCHRIFT

(11) **EP 0 497 077 B1**
(45) Veröffentlichungstag und Bekanntmachung des Hinweises auf die Patenterteilung: **17.07.1996**
(21) Anmeldenummer: 91810062.9
(22) Anmeldetag: 28.01.1991
(51) Int. Cl.: G01N 27/26, G01N 27/40

(54) **Vorrichtung zur Vorbereitung von Proben insbesondere für Analysezwecke**
Device for preparing samples for analyses
Appareil pour la préparation d'échantillon à fins d'analyse

(43) Veröffentlichungstag der Anmeldung: 05.08.1992
(73) Patentinhaber: CIBA-GEIGY AG, 4002 Basel (CH)
(72) Erfinder: Manz, Andreas, Dr., 4056 Basel (CH)

(56) Entgegenhaltungen:
- EP-A- 0 171 676
- EP-A- 0 256 552
- DE-A- 1 598 110
- US-A- 4 465 582
- JOURNAL OF CHROMATOGRAPHIC SCIENCE, Band 10, September 1972, Seiten 557-559; D.G. HOWERY et al.: "Continuous-flow rectangular-bed electrophoresis"
- AIAA J., Band 16, Nr. 5, Mai 1978, Seiten 471-474; L.R. McCREIGHT et al.: "Continuous flow electrophoretic separator for biologicals"

## Beschreibung

Die Erfindung betrifft eine Vorrichtung zur Vorbereitung oder Gewinnung von Proben, insbesondere für Analysezwecke, aus einer Flüssigkeit oder unter Verwendung einer Trägerflüssigkeit.

Eine derartige Aufbereitung einer Probe ist beispielsweise bei der Fließ-Injektions-Analyse bekannt. Dabei erfolgt eine Filtration, Verdünnung, Aufkonzentrierung, Extraktion, chemische Reaktion oder eine sonstige bekannte Verfahrensweise. Es ergeben sich bei einer derartigen Vorbereitung oder Gewinnung oder Aufbereitung von Proben aus flüssigen, wässrigen oder biologisch-wässrigen Medien jedoch Schwierigkeiten, da eine Trennung der Probemoleküle nach elektrischer Ladung bzw. nach ionischen Mobilitäten in der Regel schwierig bis unmöglich ist.

Es besteht deshalb die Aufgabe, eine Vorrichtung der eingangs erwähnten Art zu schaffen, mit der eine möglichst kontinuierliche Probenaufbereitung in dem Sinne möglich ist, daß ausschließlich Moleküle einer bestimmten Ladung bzw. elektrophoretischen Beweglichkeit oder ionischen Mobilität gewonnen werden können, wobei die Durchlaufzeit sehr kurz sein soll und auch geringe Mengen an Ausgangsmaterial zur Erlangung einer ausreichend großen Probe genügen sollen.

Die Lösung dieser Aufgabe besteht darin, daß die Vorrichtung ein im wesentlichen flaches, in einen etwa plattenförmigen Körper eingearbeitetes oder eingeätztes Fließbett aufweist, welches an in Fließrichtung einander entgegengesetzten Enden zumindest einen Einlaß und einen Auslaß aufweist und einen die Ränder des Fließbettes und dieses überdeckenden Abschluß hat, daß parallel zu dem Fließbett beidseitig Vertiefungen in den plattenförmigen Körper eingearbeitet oder eingeätzt sind, die als Elektrodenräume dienen und mit Stromquellen verbunden sind, und daß zwischen dem Fließbett und den Elektrodenräumen quer zur Fließrichtung und zur Erstreckungsrichtung des Fließbettes verlaufende feine Kanäle jeweils nebeneinander angeordnet sind.

In überraschender Weise wird also für die Probengewinnung das von der Freifließ-Elektrophorese bekannte Verfahren angewendet, welches bisher zur Probenaufbereitung für die Gewinnung von Proben für Analysezwecke nicht geeignet war, da es zur Gewinnung von Proteinen oder dergleichen Stoffen diente und die dafür vorgesehenen Apparaturen zu groß und zu teuer für eine Probenaufbereitung sind. Die in den bisher bekannten Apparaturen notwendigen Mengen sind derart groß, daß sie häufig diejenigen Mengen übertreffen, aus denen eine Probe gewonnen werden muß und in jedem Falle würde durch die erforderlichen Ausgangsmengen an Substrat der Preis für die Probegewinnung und auch die Zeitdauer zu hoch. Durch ein in einen plattenförmigen Körper geätztes oder eingearbeitetes Fließbett läßt sich die Anordnung jedoch derartig miniaturisieren, daß in kürzester Zeit und mit eine sehr geringen Substanzmenge gewünschte Proben erhalten werden können. Dabei kann in vorteilhafter Weise ein sehr gleichmäßiges flaches und wenig tiefes Fließbett geschaffen werden, in welchem günstigste Strömungsverhältnisse für eine Elektrophorese geschaffen werden können.

Der die Ränder des Fließbettes und die Elektrodenräume überdeckende Abschluß kann eine insbesondere glatte Platte sein, die - zum Beispiel unter Wärmeeinwirkung, durch "Bonding", durch Kleben, durch Anschmelzen oder dergleichen - mit dem das Fließbett enthaltenden Körper verbunden sein kann. Somit ist auch die Herstellung der Vorrichtung insgesamt relativ einfach und preiswert.

Die schon angesprochene Miniaturisierung der Vorrichtung kann zum Beispiel dahingehen, daß das flache Fließbett in Fließrichtung des Substrates eine Länge von etwa 1 mm bis etwa 50 mm oder etwa 60 mm oder etwa 70 mm oder gegebenenfalls etwa 100 mm oder auch dazwischenliegende Abmessungen hat und daß seine Breite zwischen etwa 0,1 mm und etwa 1/2 cm oder etwa 1 cm oder dazwischen liegt und daß schließlich die Tiefe des Fließbettes - also der lichte Abstand zwischen dem Boden des Fließbettes und der überdeckenden Abschlußplatte - etwa 1 Mikrometer bis ungefähr 50 Mikrometer beträgt. Dabei brauchen die sich jeweils entsprechenden Werte dieser Abmessungen nicht genau proportional zu den vorstehend angegebenen Grenzen verwendet sein, das heißt, es kann zum Beispiel ein Fließbett von 25 mm auch nur 0,1 mm oder aber eventuell 3 mm oder 4 mm breit sein. Somit existiert eine Vielzahl von Variationsmöglichkeiten innerhalb der angegebenen Abmessungen, um eine jeweils zweckmäßige Größe der Vorrichtung für die angestrebten Zwecke zu schaffen.

Der Einlaß und der Auslaß können jeweils Kanäle von etwa 1 Mikrometer bis ungefähr 100 Mikrometer Breite und/oder Tiefe sein. Dadurch sind die Abmessungen von Einlaß und Auslaß an die miniaturisierten Abmessungen des Fließbettes selbst angepaßt, so daß die gewünschten Strömungsverhältnisse entstehen.

Der Querschnitt der quer zu dem Fließbett verlaufenden Kanäle zur Verbindung des Fließbettes mit den Elektrodenräumen kann kleiner als der der Ein- und Auslaßkanäle und insbesondere so klein sein, daß neben der Spannungsübertragung praktisch kein Massetransport durch diese Kanäle stattfindet. Bei den relativ großen Apparaturen für eine Elektrophorese ist eine Abschirmung der Elektrodenräume gegenüber dem Fließbett durch Membranen bekannt, die einen Massetransport zu den Elektrodenräumen verhindern.

Eine solche Apparatur ist beispielsweise aus der EP-A-0,256,552 bekannt. Die dort beschriebene Apparatur umfasst ebenfalls ein flaches, in einen plattenförmigen Körper eingearbeitetes Fliessbett, welches an den in Fliessrichtung einander entgegengesetzten Enden einen Einlass und einen Auslass aufweist. Ferner weist die Apparatur einen das Fliessbett überdeckenden Abschluss auf. Parallel zur Erstreckungsrichtung des Fliessbetts und parallel zur Fliessrichtung sind Elektroden vorgesehen, die an das Fliessbett angrenzen, wobei jedoch zwischen den Elektroden und dem Fliessbett jeweils eine (hier für Proteine) undurchlässige Membran vorgesehen ist.

Eine Anordnung von Membranen wäre jedoch bei der miniaturisierten erfindungsgemäßen Vorrichtung nicht möglich, weil schon die Befestigung solcher Membranen und ihre Abdichtung zu unüberwindlichen Schwierigkeiten führen würde. Es bedurfte somit einer besonderen Maßnahme, um ohne Membranen trotzdem einen Massetransport zu den Elektrodenräumen weitestgehend auszuschließen, aber die Spannungsübertragung innerhalb der Flüssigkeit zu ermöglichen.

Die querverlaufenden Kanäle können dabei entlang dem Fließbett einander unmittelbar benachbart und parallel sein und ihre Länge kann insbesondere etwa der Breite der Elektrodenräume entsprechen oder kürzer als diese Breite sein. Durch die unmittelbare Anordnung eines dieser sehr kleinen Kanäle neben dem anderen ergibt sich praktisch über eine große oder die gesamte Länge des Fließbettes die gewünschte Verbindung für die Spannungsübertragung zu den Elektrodenräumen, wobei aber gleichzeitig der Massetransport praktisch ausgeschlossen ist. Zweckmäßig ist es, wenn die kanalförmigen Elektrodenräume - die im wesentlichen parallel zu dem Fließbett verlaufen - Zu- oder Abführkanäle für eine permanente Spülung aufweisen, die insbesondere in den das Fließbett enthaltenden Körper eingearbeitet oder eingeätzt und von dem Abschluß überdeckt sind. Es sich somit alle wesentlichen Vertiefungen wie das Fließbett selbst, die Elektrodenräume und die verschiedenen Kanäle in ein und demselben plattenförmigen Körper eingearbeitet oder eingeätzt, so daß sie auch von der Abschlußplatte gemeinsam verschlossen sind und so eine kompakte und miniaturisierte Vorrichtung zur Verfügung gestellt werden kann, in der auf engstem Raum und mit ganz geringen Mengen an Substrat Proben auf der Basis der elektrischen Ladung und ionischen Mobilität gewonnen werden können.

Die insbesondere ebenfalls in den Körper eingearbeiteten oder eingeätzten Einlaßkanäle und Auslaßkanäle können mit einem Einlaß für Trägerflüssigkeit verbunden sein und jeweils in Fließrichtung vor bzw. hinter dem Fließbett in Fließrichtung orientiert sein. Somit kann ein Probeeinlaß über einen Zuführkanal mit einem oder wenigen Einlaßkanälen insbesondere außerhalb der Längsmitte des Fließbettes verbunden sein.

Ebenso kann ein Probenauslaß mit Auslaßkanälen verbunden sein und in direkter Verlängerung des oder der Probeneinlaßkanäle - für elektrisch neutrale Ionen oder Probemoleküle - oder insbesondere für eine Zonenelektrophorese gegenüber dem Probeneinlaß auf einer anderen Seite der Längsmitte des Fließbettes angeordnet sein.

Es folgen nun noch einige Varianten, für die keine separaten Ansprüche aufgestellt sind. Eine Variation kann darin bestehen, daß der Probeneinlaß in der Mitte der Schar von Einlaßkanälen zu dem Fließbett zur Durchführung einer Feldsprungelektrophorese angeordnet ist.

Stattdessen ist es auch möglich, daß für eine Isotachophorese ein außermittiger Zuführkanal für die Probe zu den Einlaßkanälen vorgesehen ist.

Schließlich kann für eine Elektrophorese mit isoelektrischer Fokusierung im Bereich der Einlaßkanäle insbesondere beidseitig des Eintrittes des Zuführkanales dieser auf seinem Weg mehrfach gewunden oder hin- und hergeführt sein und solche Windungen können jeweils beidseitig der Einlaßkanäle zur Erzeugung des Fokussier-Feldes angeordnet sein.

Es gibt also eine Vielzahl von Möglichkeiten, unterschiedlichste Proben aufzubereiten je nachdem, welche Ladung oder ionische Mobilität bei den gewünschten Proben existiert. Dabei kann auch ein Auslaßkanal für nicht geladene oder neutrale Verbindungen etwa in Flucht mit dem Einlaßkanal am entgegengesetzten Ende des Fließbettes angeordnet sein, ein Auslaß für geladene Verbindungen oder Ionen jedoch gegenüber der Längsmitte des Fließbettes und dem Einlaß seitlich versetzt sein.

Die erfindungsgemäße Vorrichtung erlaubt für die Gewinnung komplexer Proben beziehungsweise die Verarbeitung sehr komplexer Gemische, die aus vielen verschiedenen Substanzen bestehen können, eine Ausgestaltung, bei der der Auslaß eines ersten Fließbettes mit dem Einlaß wenigstens eines zweiten Fließbettes verbunden ist. Selbst eine Verbindung dieses zweiten Fließbettes wiederum mit einem weiteren Fließbett und die entsprechende Bearbeitung und Anwendung elektrischer Felder ist möglich.

Es sei noch erwähnt, daß die das Fließbett aufweisende Platte und/oder ihre Abdeckplatte aus Silizium und/oder Quarz und/oder Glas bestehen können. Dies sind Werkstoffe, die sich gut dazu eigenen, geäzt zu werden, also die gewünschte miniaturisierte Anordnung des Fließbettes und der verschiedenen Kanäle zu ermöglichen, und die außerdem gegenüber unterschiedlichsten Substanzen unempfindlich und unangreifbar bleiben, trotzdem aber relativ preiswert sind.

Insgesamt ergibt sich eine Vorrichtung, mit der aus einem komplexen Probegemisch neutrale Moleküle oder Ionen einer bestimmten Ladung als Probe gewonnen werden können, wobei diese eine Probe beispielsweise für Analysezwecke bildenden Moleküle kontinuierlich gesammelt werden können.

Somit ist zum Beispiel ein kontinuierliches Messen der betreffenden Komponenten in einem Analysesystem zum Beispiel bei der überwachung von Prozessen oder im Umweltschutz möglich. Dabei ist vorteilhaft, daß äußerst geringe Ausgangsmengen des zu untersuchenden Substrates genügen und nicht die Gefahr einer Verstopfung der Vorrichtung besteht, wie sie bisher bei einer kontinuierlichen Probeaufbereitung mit Hilfe von Filtern gegeben ist. Die Durchlaufzeit kann dabei im Sekundenberyich liegen. Auch wird nur eine sehr geringe Elektrolytmenge benötigt. Dies hat auch bei der Entsorgung der Reststoffe einen entsprechend großen Vorteil.

Nachstehend ist die Erfindung anhand der Zeichnung in mehreren Ausführungsbeispielen näher beschrieben.

Es zeigt in zum Teil schematisierter Darstellung:
- Fig. 1: eine Vorrichtung zur Vorbereitung oder Gewinnung von Proben aus Flüssigkeiten mit einem plattenförmigen Körper, in dessen Innerem ein Fließbett und Elektrodenräume sowie Kanäle angeordnet sind, mit zu diesem Körper führenden Elektroden und Elektrolyt-Lösungsleitungen, die durch eine Spannungsquelle verbunden sind sowie ferner mit Pumpen für die Zuführung einer gesamten Probe sowie einer Trägerflüssigkeit,
- Fig. 2: eine Draufsicht der eigentlichen Vorrichtung und ihres plattenförmigen Körpers mit dem Fließbett, den Kanälen und Elektrodenräumen,
- Fig. 3: in schaubildlicher Darstellung ein Teilstück der erfindungsgemäßen Vorrichtung mit dem Fließbett, den Elektrodenräumen, Spülkanälen und einer oberen Abdeckplatte,
in stark vergrößertem Maßstab
- Fig. 4: einen Querschnitt der Vorrichtung gemäß Fig. 2 im Bereich der Einlaßkanäle in das Fließbett gemäß der Linie IV - IV in Fig. 2,
- Fig. 5: einen der Fig. 4 entsprechenden Querschnitt durch den Anfang des Fließbettes und durch zur Spülung der Elektrodenräume dienende Einlaßkanäle gemäß der Linie V-V in Fig. 2,
- Fig. 6: einen Querschnitt durch das Fließbett und die dazu parallelen Elektrodenräume sowie Spülungskanäle dafür gemäß der Linie VI-VI in Fig. 2,
- Fig. 7: drei verschiedene Möglichkeiten unterschiedlicher Anordnungen von Auslässen für nicht geladene Verbindungen oder Ionen oder mit einem leitfähigen Detektor, zum Beispiel einem Elektrodenpaar, im Bereich eines Auslasses,
- Fig. 8: vier verschiedene Möglichkeiten unterschiedlicher Anordnungen der Probeneinlässe und Zuführungen zu der Schar von Einlaßkanälen,
- Fig. 9: ein Ausführungsbeispiel, bei welchem zwei plattenförmigen Körper mit Fließbett in Reihe hintereinander geschaltet sind, aber jedes Fließbett einen eigenen Eintritt für Trägerflüssigkeit hat, sowie
- Fig. 10: eine Ansicht des das Fließbett aufweisenden plattenförmigen Körpers in seinen Umrissen und mit Hinweispfeilen für die Fließrichtung der Trägerflüssigkeit, den Probeneinlaß, die Auslenkung der Probe zu ihrem Auslaß und die Wanderrichtung unterschiedlicher sonstiger Komponenten entsprechend dem durch weitere Pfeile verdeutlichten elektrischen Feld.

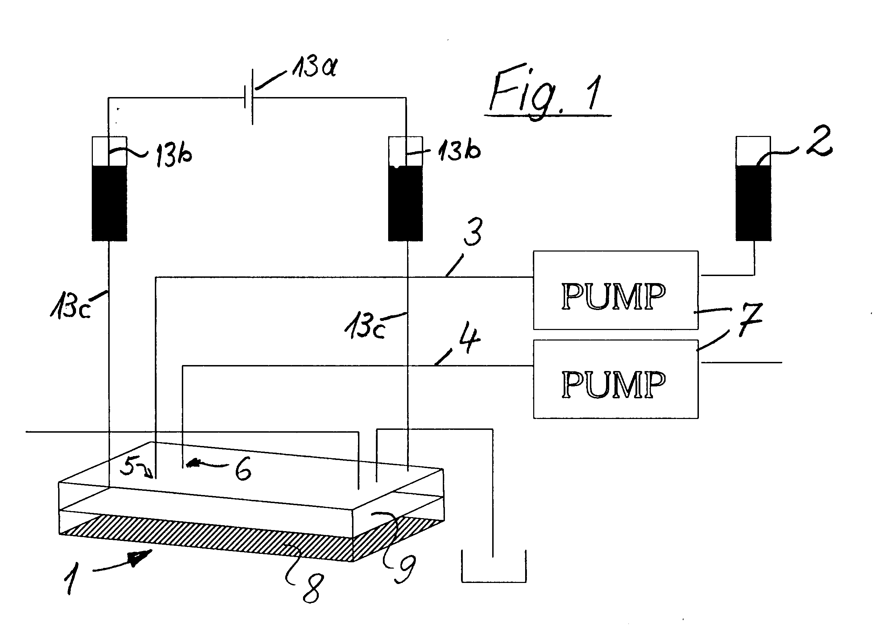

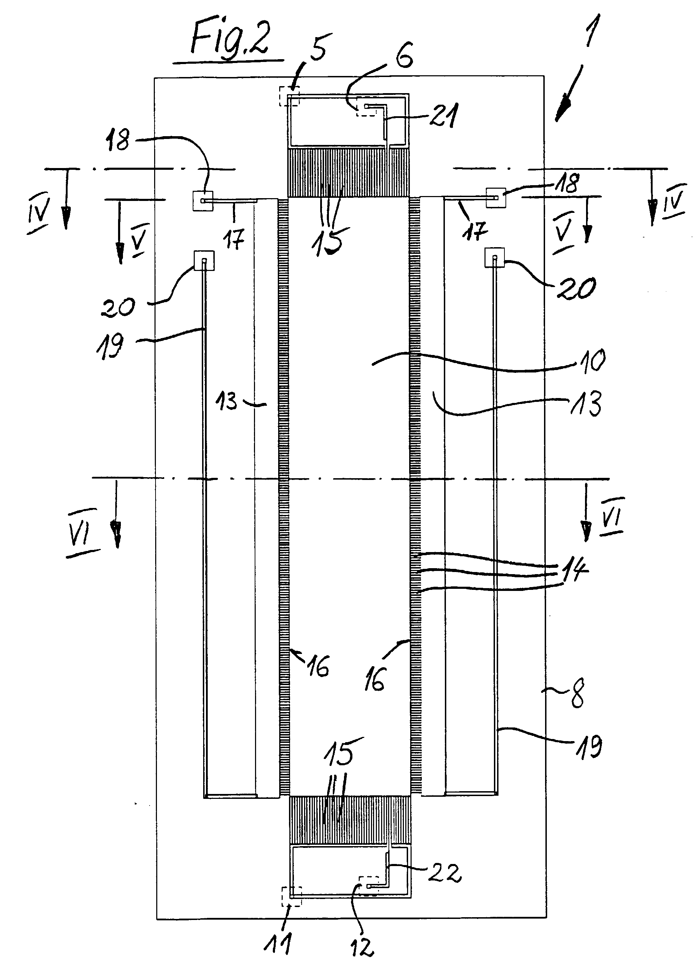

Eine im ganzen mit 1 bezeichnete, vor allem in Fig. 2 sowie den Figuren 3 bis 6 deutlich dargestellte Vorrichtung 1 dient zur Vorbereitung und Gewinnung von Proben zum Beispiel für Analysezwecke aus einer Flüssigkeit oder einem Flüssigkeitsgemisch unter Verwendung einer Trägerflüssigkeit 2. Dabei erkennt man sowohl in Fig. 1 als auch in Fig. 2, daß die Trägerflüssigkeit 2 und die eigentliche gesamte Probe unterschiedliche Zuführleitungen 3 und 4 zu unterschiedlichen Einlässen 5 und 6 haben. Im Bereich der Leitungen 3 und 4 können für die Beförderung der Flüssigkeiten Pumpen 7 angeordnet sein.

Die eigentliche Vorrichtung 1 weist einen im wesentlichen plattenförmigen Körper 8 und eine diesen überdeckende glatte Platte 9 als Abschluß für in die Platte 8 eingearbeitete und eingeäzte Vertiefungen auf, die man vor allem anhand der Figuren 2 bis 6 deutlich erkennt.

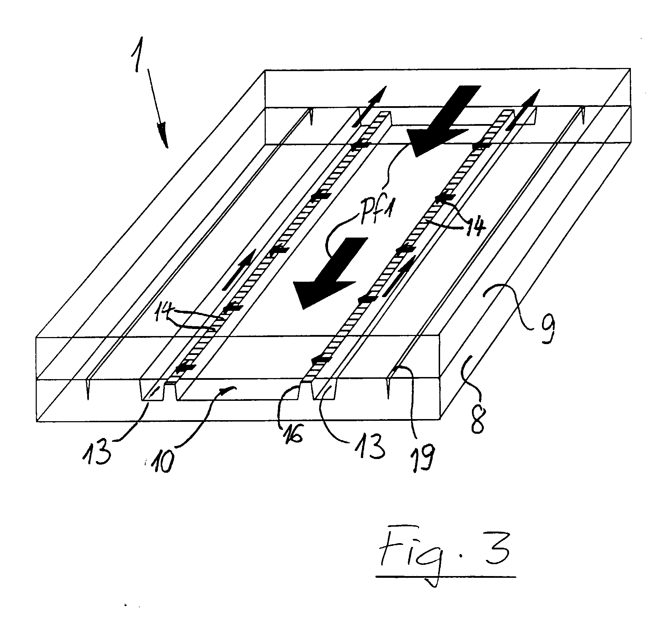

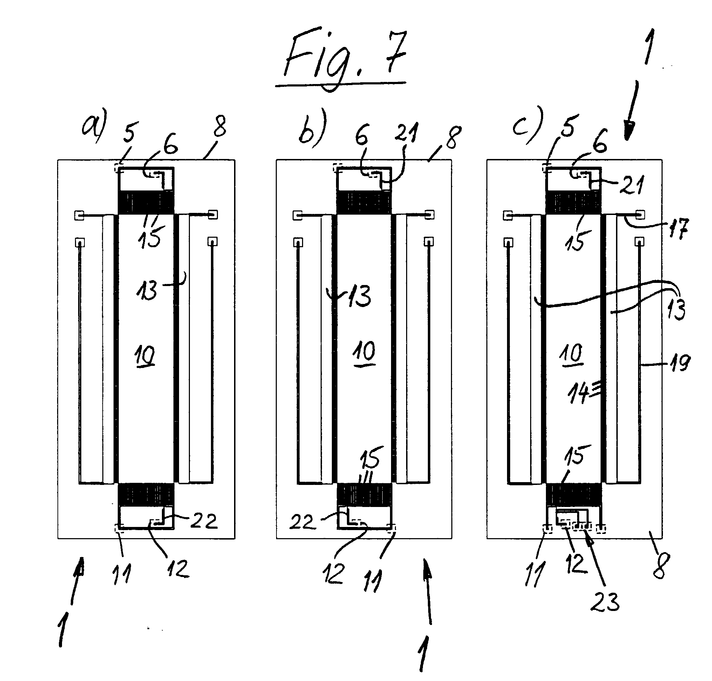

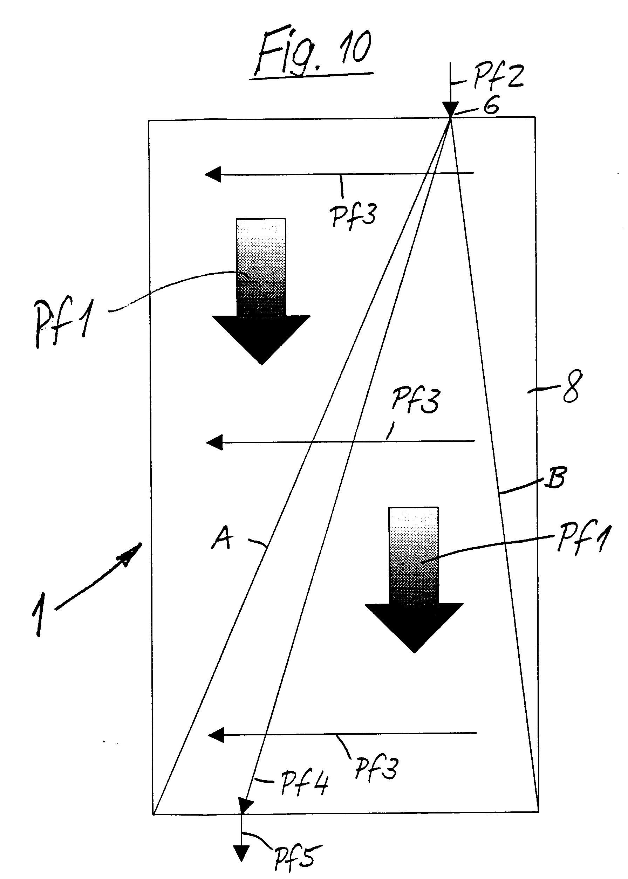

Vor allem weist der plattenförmige Körper 8 und somit die Vorrichtung 1 ein eingearbeitetes oder eingeäztes flaches Bett, nämlich ein Fließbett 10 als eigentliche Trennkammer auf. Dieses hat an in Fließrichtung gemäß den breiten Pfeilen PF 1 in Fig. 3 und Fig. 10 entgegengesetzten Enden die Einlässe 5 und 6 für Trägerflüssigkeit 2 und Probesubstrat einerseits und Auslässe 11 und 12, wobei der Auslaß 11 wiederum für die Trägerflüssigkeit sowie Reste der Probe und der Auslaß 12 zum Abführen der aufbereiteten Probe dient. Die Abschluß-Platte 9 übdeckt gemäß den Figuren 3 bis 6 den gesamten plattenförmigen Körper 8 und somit die Ränder des Fließbettes 10 und sämtliche zugehörigen, in den Körper 8 eingearbeiteten, noch näher zu beschreibenden Vertiefungen. Dabei erkennt man in den Figuren 3, 5 und 6, daß parallel zu dem Fließbett 10 beidseitig Vertiefungen in den plattenförmigen Körper 8 eingearbeitet oder eingeäzt sind, die als Elektrodenräume 13 dienen und mit einer Stromquelle 13a (Fig. 1) über entsprechende Elektroden 13b und eine Elektrolytlösung sowie deren Zuführleitungen 13c verbunden sind. Zwischen dem Fließbett 10 und diesen parallel zu ihm verlaufenden Elektrodenräumen 13 sind gemäß Fig. 2 und 6 quer zur Fließrichtung und zur Erstreckungsrichtung des Fließbettes 10 verlaufende feine Kanäle 14 jeweils parallel und in Reihe nebeneinander angeordnet und zwar gemäß Fig. 2 entlang der gesamten Länge des Fließbettes 10.

Die die Ränder des Fließbettes 10 und dieses selbst sowie die Elektrodenräume 13 und die Kanäle 14 überdeckende Platte 9 kann zum Beispiel durch "Bonding" mit dem das Fließbett 10 und die sonstigen Vertiefungen aufweisenden plattenförmigen Körper 8 verbunden sein.

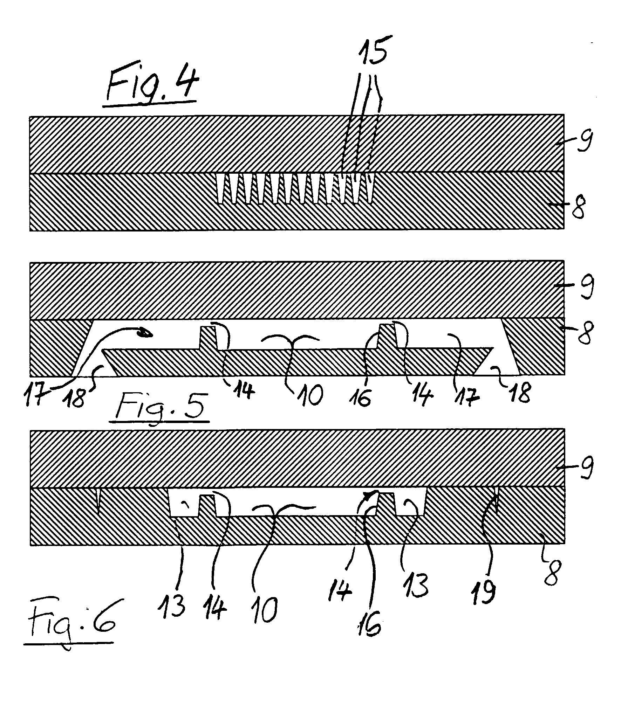

Fig. 2 bis 6 machen deutlich, daß sich also insgesamt eine sehr kompakte, flache, im Ausführungsbeispiel rechteckige Vorrichtung 1 ergibt, die auf kleinsten Abmessungen eine wirkungsvolle kontinuierliche Aufbereitung von Proben ermöglicht. Beispielsweise kann das Fließbett 10 - welches gemäß den Figuren 3, 5 und 6 über seine Breite eine praktisch gleichbleibende Tiefe hat, eine Länge von etwa 1 mm bis etwa 50 mm oder auch etwa 60 mm oder 70 mm, je nach Anwendungsfall auch 80 mm oder gegebenenfalls etwa 100 mm haben und seine in den Figuren 5 und 6 deutlich erkennbare Breite kann etwa zwischen o,1 mm und etwa einem halbem Zentimeter oder auch etwa einem ganzen Zentimeter oder dazwischen liegen, während die schon angesprochene Tiefe des Fließbettes 10 etwa 1 Mikrometer bis ungefähr 50 Mikrometer betragen kann. Daraus ergeben sich also für die Gesamtabmessung der Vorrichtung sehr kleine Maße und vor allem ist das Volumen des Fließbettes 10 so klein, daß nur ganz geringe Mengen an Substrat und Trägerflüssigkeit zum Herstellen einer Probe für Analysezwecke benötigt werden. Als eigentlicher Einlaß und Auslaß zu dem Fließbett 10 sind jeweils Scharen von parallelen feinen Kanälen 15 vorgesehen, die ungefähr 1 Mikrometer bis etwa 100 Mikrometer Breite und/oder Tiefe haben deren Form und Größe relativ zu den übrigen Vertiefungen erkennt man in dem Querschnitt in Fig. 4.

Die Abmessungen der quer zum Fließbett 10 verlaufenden Kanäle 14 zur Verbindung des Fließbettes 10 mit den Elektrodenräumen 13 ist kleiner als der der Ein- und Auslaßkanäle 15, was sich aus dem in Fig. 3 dargestellten Teilausschnitt aus der Vorrichtung 1 und den Figuren 5 und 6 ergibt. Diese quer verlaufenden Kanäle 14 sind so klein, daß neben der Spannungsübertragung praktisch kein Massetransport durch diese Kanäle 14 stattfindet, d.h. durch diese feinen und feinsten Kanäle wird eine für den Stromfluß in der Elektrolyt-Lösung erforderliche Spannungsübertragung aber praktisch kein Massetransport ermöglicht.

Diese feinen Kanäle 14 entlang dem Fließbett 10 haben jeweils eine Länge, die etwa der Breite der Elektrodenräume 13 entspricht oder - wie in den Figuren 3 und 6 erkennbar - sogar kürzer als diese Breite ist. Dabei wird in dem Figuren 5 und 6 auch deutlich, daß diese feinen und querverlaufenden Kanäle 14 an der Oberseite des Fließbettes angeordnet sind, während der größte Teil des Fließbettes von seinen Seitenwänden 16 begrenzt wird. Auch dadurch wird ein Massetransport aus dem Fließbett 10 in die Elektrodenräume 13 unterbunden. Gleichzeitig ergibt sich so die Möglichkeit, das Fließbett 10, die Kanäle 14 und die Elektrodenräume 13 alle von derjenigen Seite in den plattenförmigen Körper 8 einzuarbeiten, der später mit der Platte 9 überdeckt und abgeschlossen wird. Sowohl der plattenförmige Körper 8 als auch die Platte 9 haben dabei an den einander zugewandten Flächen eine gleichbleibende ebene Ausbildung, die bei der Platte 8 nur durch das Fließbette 10 und die sonstigen Vertiefungen unterbrochen ist.

Die kanalförmigen Elektrodenräume 13 haben die in den Figuren 2 und 5 erkennbaren Zuführkanäle 17 - mit Einlaßöffnungen 18 - und außerdem Abführkanäle 19 für eine permanente Spülung. Auch diese Zuführkanäle 17 und die Abführkanäle 19, die wiederum den Einlaßöffnungen 18 entsprechende Auslässe 20 haben, sind in den das Fließbett 10 enthaltenden flachen plattenförmigen Körper 8 eingearbeitet oder eingeäzt und von der Abschluß-Platte 9 überdeckt.

Gemäß Fig. 2 sind die ebenfalls eingearbeiteten oder eingeäzten Einlaßkanäle 15 mit dem Einlaß 5 für Trägerflüssigkeit 2 verbunden und in Fließrichtung vor dem Fließbett 10 in Fließrichtung orientiert. Ebenso sind die Auslaßkanäle 15 in Fließrichtung hinter dem Fließbett 10 in dieser Richtung angeordnet, was vor allem aus Fig. 2 erkennbar ist.

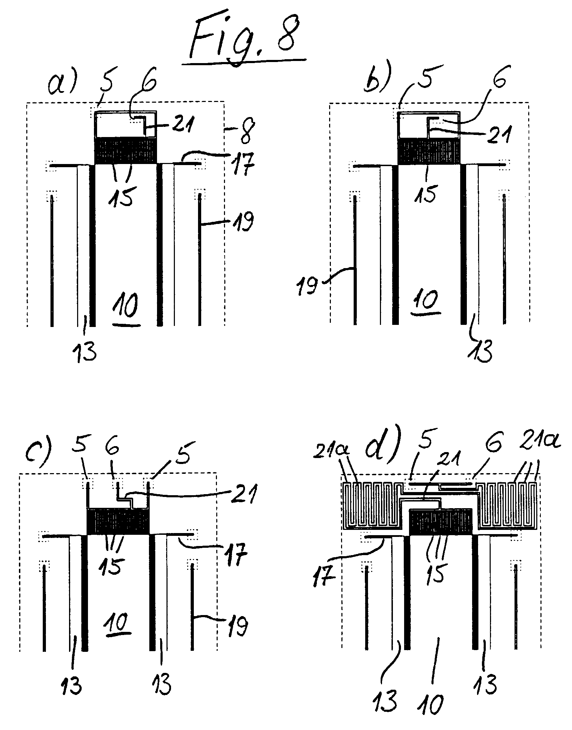

Zusätzlich erkennt man besonders deutlich in Fig. 2, außerdem aber auch in den Figuren 7 und 8, daß der Probeeinlaß 6 über einen Zuführkanal 21 mit einem oder wenigen Einlaßkanälen 15 verbunden ist, die bevorzugt gemäß Fig. 2 oder den Figuren 7 sowie den Figuren 8a und 8c außerhalb der Längsmitte des Fließbettes 10 in dieses münden.

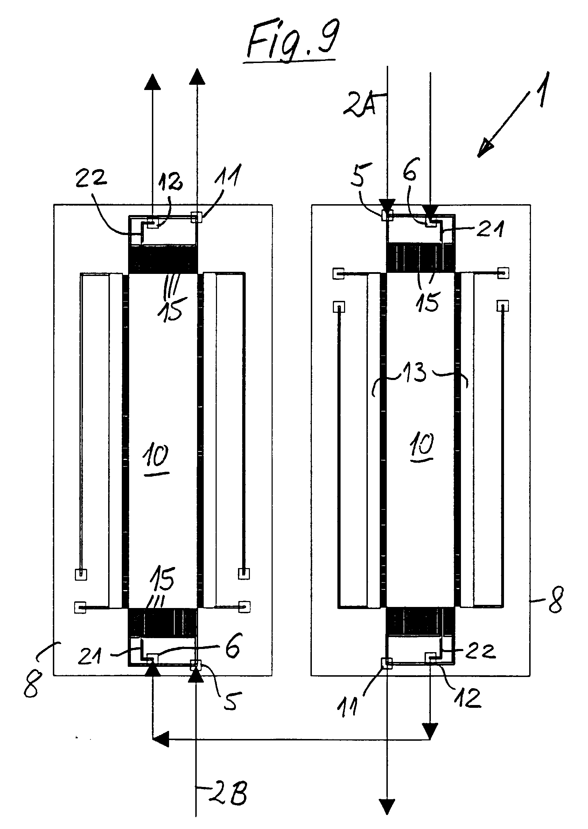

Analog ist ein Probenauslaßkanal 22 mit Auslaßkanälen 15 verbunden und kann relativ zu dem Zuführkanal 21 unterschiedliche Lagen einnehmen, wie es aus den Figuren 7a, 7b und 7c sowie Fig. 9 hervorgeht.

Fig. 2, Fig. 7a und Fig. 9 zeigen Anordnungen, bei denen der Probenauslaßkanal 22 in direkter Verlängerung des oder der Probeneinlaßkanäle angeordnet ist, um nicht geladene oder neutrale Verbindungen etwa in Flucht mit dem Einlaß- oder Zuführkanal 21 aufnehmen und abführen zu können. Für das Abführen geladener Verbindungen oder Ionen und vor allem die Anwendung einer Zonenelektrophorese kann jedoch der Probenauslaßkanal 22 gemäß Fig. 7b gegenüber dem Probeneinlaß auf der anderen Seite der Längsmitte des Fließbettes 10 und dem Einlaß seitlich versetzt angeordnet sein.

Während Fig. 8a wiederum einen Probeneinlaßkanal 21 zu einem seitlich der Längsmitte des Fließbettes 10 angeordneten Einlaßkanal 15 zeigt, ist Fig. 8b ein Beispiel für eine Anordnung, bei der der Probeneinlaßkanal 21 in der Mitte der Schar von Einlaßkanälen 15 zu dem Fließbett 10, also praktisch in Flucht mit der Längsmitte des Fließbettes 10, angeordnet ist, so daß sich diese Anordnung zur Durchführung einer Feldsprungelektrophorese eigent. Die Anordnung gemäß Fig. 8a ist, wie schon erwähnt, für eine Zonenelektrophorese geeigent und vorgesehen.

Fig. 8c zeigt eine Anordnung für eine Isotachophorese mit einem außermittigen Zuführkanal 21 für die Probe zu den entsprechenden Einlaßkanälen 15 und zwei Einlässen 5 für unterschiedliche Trägerflüssigkeiten.

Fig. 8d zeigt schließlich, daß die erfindungsgemäße Vorrichtung auch eine Elektrophorese mit isoelektrischer Fokussierung im Bereich der Einlaßkanäle 15 dadurch ermöglicht, daß beidseitig des Eintrittes des Zuführkanales 21 dieser auf seinem Weg mehrfach gewunden ist und solche Windungen 21a beidseitig der Einlaßkanäle 15 angeordnet sind, um ein Fokussierfeld erzeugen zu können. Dabei werden die Trägerflüssigkeit und die Probe von ihren Einlässen 5 und 6 aus zusammengeführt, um dann durch den Zuführkanal 21 und die Windungen 21a zu fließen.

In Fig. 7c erkennt man an den Auslaßkanälen noch einen Leitfähigkeitsdetektor 23, der als Elektrodenpaar ausgebildet sein kann.

In Fig. 10 ist das Prinzip der Wirkungsweise der Vorrichtung 1 schematisch dargestellt. Dabei ist die Vorrichtung 1 in Draufsicht erkennbar. Im oberen Bereich ist der Probeneinlaß 6 als Pfeil Pf 2 angedeutet. Im Inneren der Vorrichtung 1, nämlich in dem Fließbett 10, fließt die Trägerflüssigkeit gemäß den Pfeilen Pf 1. Ein elektrisches Feld wird durch die Elektrodenräume 13 in Richtung der Pfeile Pf 3 erzeugt. Dies führt im Verlaufe des Fließbettes 10 und der Strömung zu einem Abdriften der gewünschten Komponente aus der Probe gemäß dem schrägen Pfeil Pf 4, so daß die aufbereitete Probe am Auslaß gemäß dem Pfeil Pf 5 aufgefangen werdenkann. Die anderen geladenen Komponenten werden gemäß den Linien A und B ebenfalls aus dem Gesamtstrom abgelenkt und können durch sonstige, nicht zum Auslaß der aufbereiteten Probe gehörenden Auslaßkanälen 15 abgeführt werden. Je nachdem welche Komponente die aufbereitete Probe bilden soll, müssen also die die Probe auffangenden Auslaßkanäle entsprechend angeordnet werden.

Fig. 9 zeigt ein Ausführungsbeispiel, bei welchem der Probeauslaß 12 eines ersten Fließbettes 10 mit dem Probeeinlaß 6 wenigstens eines zweiten Fließbettes 10 verbunden ist, d.h. es sind praktisch zwei Vorrichtungen 1 in Reihe hintereinander geschaltet. Damit lassen sich komplexe Gemische aus verschiedenen Substanzen bearbeiten.

Zum Beispiel kann an dem Einlaß 5 des ersten Fließbettes 10 oder der ersten Vorrichtung 1 eine Trägerflüssigkeit 2A mit einem pH-Wert von 7 und ein Probegemisch zum Beispiel aus vier Komponenten wie Amimosäure, irgend ein Anion, irgend ein Kation und irgend eine neutrale Komponente, zum Beispiel Glucose, eingeführt werden.

An dem Probeauslaß 12 können davon die Aminosäure und die Glucose aufgefangen und weitergeführt werden, während am Auslaß 11 der Trägerflüssigkeit das Anion und das Kation, zum Beispiel Bromid und Eisen als Abfall abgeführt werden können.

In das zweite Fließbett werden also aus dem ursprünglichen Probengemisch nun nur noch zwei Komponenten, nämlich die Komponenten Aminosäure und Glucose, eingeführt, wobei außerdem eine Trägerflüssigkeit 2B, die sich von der ersten Trägerflüssigkeit 2A unterscheidet, zugeführt wird und zum Beispiel einen pH-Wert von 9 haben kann. Am Probenauslaß 12 kann nun die neutrale Komponente, zum Beispiel die Glucose, abgeführt werden.

Insgesamt ergibt sich also eine Vorrichtung 1, die unterschiedlichste Anwendungen bei der Gewinnung von Proben erlaubt und bei komplizierten oder komplexen Gemischen sogar durch mehrfaches Hintereinanderschalten die gewünschte Gewinnung einer Probe ermöglicht. Dabei kann die gesamte Vorrichtung 1 miniaturisiert sein, so daß sehr geringe Mengen an Substrat für die Durchführung der Probengewinnung genügen. Gleichzeitig kann die Vorrichtung 1 relativ preiswert sein, da die das Fließbett 10 aufweisende Platte 8 und die Abdeckplatte 9 aus Silizium, Quarz oder Glas bestehen können und mit bekannten Verfahren bearbeitet und verbunden werden können.

Die Vorrichtung 1 dient zur Vorbereitung oder Gewinnung von Proben insbesondere für Analysezwecke aus einer Flüssigkeit oder unter Verwendung einer Trägerflüssigkeit, wobei nur sehr wenig Flüssigkeiten und Substrate zur Verfügung stehen oder verbraucht werden sollen und die Probeaufbereitung sehr schnell durchgeführt werden soll. Die Vorrichtung 1 hat dazu ein im wesentlichen flaches, in einem plattenförmigen Körper 8 eingearbeitetes oder eingeäztes Fließbett 10 , welches in Fließrichtung an einander entgegengesetzten Enden Einlässe und Auslässe hat und auf der Bearbeitungsseite des plattenförmigen Körpers 8 durch eine weitere Platte überdeckt und abgeschlossen ist, so daß das Fließbett 10 welches einen etwa nutenförmigen flachen Querschnitt hat, allseitig abgeschlossen ist. Parallel zu dem Fließbett 10 verlaufen jedoch ebenfalls in den plattenförmigen Körper 8 eingearbeitete oder eingeäzte Elektrodenräume 13, die über Elektroden 13b mit einer Stromquelle 13a verbunden sind, um innerhalb des Fließbettes 10 ein quer zur Fließrichtung gerichtetes elektrisches Feld zu erzeugen. Die Elektrodenräume 13 sind mit dem Fließbett 10 über quer zur Fließrichtung verlaufende sehr feine Kanäle 14 verbunden, die zwar eine Spannungsübertragung aber praktisch keinen Massetransport ermöglichem, also ähnlich wie Membrane wirken. Die Ätztechnik erlaubt dabei eine miniaturisierte Ausbildung der Vorrichtung 1.

## Patentansprüche

1. Vorrichtung (1) zur Vorbereitung oder Gewinnung von Proben, insbesondere für Analysezwecke, aus einer Flüssigkeit und/oder unter Verwendung einer Trägerflüssigkeit, mit einem in einen plattenförmigen Körper (8) eingearbeiteten oder eingeätzten flachen Fliessbett (10), welches an in Fliessrichtung einander entgegengesetzten Enden zumindest einen Einlass (5,6) und einen Auslass (11,12) aufweist und einen die Ränder des Fliessbettes (10) und das Fliessbett (10) überdeckenden Abschluss hat, sowie mit Elektrodenräumen (13), die beidseitig parallel zur Fliessrichtung und zur Erstreckungsrichtung des Fliessbetts (10) in den plattenförmigen Körper (8) eingearbeitet oder eingeätzt sind, dadurch gekennzeichnet, dass die Elektrodenräume (13) mit einer Stromquelle (13a) verbunden sind und dass zwischen dem Fliessbett (10) und den Elektrodenräumen (13) quer zur Fliessrichtung und zur Erstreckungsrichtung des Fliessbetts (10) verlaufende feine Kanäle (14) jeweils nebeneinander angeordnet sind.

2. Vorrichtung nach Anspruch 1, dadurch gekennzeichnet, daß der die Ränder des Fließbettes (10) und die Elektrodenräume (13) sowie die diese verbindenden Kanäle (14) überdeckende Abschluß eine insbesondere glatte Platte (9) ist, die - zum Beispiel unter Wärmeeinwirkung durch bonding, durch Kleben, durch Anschmelzen oder dergleichen - mit dem das Fließbett (10) enthaltenden Körper (8) verbunden ist.

3. Vorrichtung nach Anspruch 1 oder 2, dadurch gekennzeichnet, daß das flache Fließbett (10) in Fließrichtung des Substrates eine Länge von etwa 1 mm bis etwa 50 mm oder etwa 60 mm oder gegebenenfalls etwa 100 mm hat und daß seine Breite zwischen etwa 0,1 mm und etwa einem halben Zentimeter oder etwa einem Zentimeter oder dazwischen liegt und daß die Tiefe des Fließbettes (10) etwa 1 Mikrometer bis ungefähr 50 Mikrometer oder 100 Mikrometer beträgt.

4. Vorrichtung nach einem der Ansprüche 1 bis 3, dadurch gekennzeichnet, daß der Einlaß und der Auslaß jeweils Kanäle (15) von etwa 1 Mikrometer bis ungefähr 100 Mikrometer Breite und/oder Tiefe aufweist.

5. Vorrichtung nach einem der Ansprüche 1 bis 4, dadurch gekennzeichnet, daß der Querschnitt der quer zu dem Fließbett (10) verlaufenden Kanäle (14) zur Verbindung des Fließbettes (10) mit den Elektrodenräumem (13) kleiner als der der Ein- und Auslaßkanäle (15) und insbesondere so klein ist, daß neben der Spannungsübertragung praktisch kein Massetranport durch die Kanäle (14) stattfindet.

6. Vorrichtung nach einem der Ansprüche 1 bis 5, dadurch gekennzeichnet, daß die quer verlaufenden Kanäle (14) entlang dem Fließbett (10) einander unmittelbar benachbart und parallel sind, insbesondere rechtwinklig zur Orientierung des Fließbettes (10) und der Elektrodenräume (13) verlaufen und daß ihre Länge insbesondere etwa der Breite der Elektrodenräume (13) entspricht oder kürzer als diese Breite ist.

7. Vorrichtung nach einem der Ansprüche 1 bis 6, dadurch gekennzeichnet, daß die kanalförmigen Elektrodenräume (13) Zuführkanäle (17) oder Abführkanäle (19) für eine permanente Spülung aufweisen, die insbesondere in den das Fließbett (10) enthaltenden Körper (8) eingearbeitet oder eingeäzt und von dem Abschluß (9) überdeckt sind.

8. Vorrichtung nach einem der Ansprüche 1 bis 7, dadurch gekennzeichnet, daß die insbesondere ebenfalls eingearbeiteten oder eingeäzten Einlaßkanäle (15) mit wenigstens einem Einlaß (5) für Trägerflüssigkeit (2) verbunden sind und jeweils in Fließrichtung vor dem Fließbett (10) und die Auslaßkanäle (15) in Fließrichtung hinter dem Fließbett (10) orientiert sind.

9. Vorrichtung nach einem der Ansprüche 1 bis 8, dadurch gekennzeichnet, daß ein Probeneinlaß (6) über einen Zuführkanal (21) mit einem oder wenigen Einlaßkanälen (15) insbesondere außerhalb der Längsmitte des Fließbettes (10) verbunden ist.

10. Vorrichtung nach einem der Ansprüche 1 bis 9, dadurch gekennzeichnet, daß ein Probenauslaßkanal (22) mit Auslaßkanälen (15) verbunden ist und in direkter Verlängerung des oder der Probeneinlaßkanäle (21) oder insbesondere für eine Zonenelektrophorese gegenüber Probeneinlaß auf einer anderen Seite der Längsmitte des Fließbettes (10) angeordnet ist.

## Claims

1. An apparatus (1) for the preparation or extraction of samples, especially for analytical purposes, from a liquid and/or using a carrier liquid, having etched or machined into a plate-shaped body (8) a planar flow bed (10) that has at least one inlet (5, 6) and one outlet (11, 12), which are arranged at opposing ends in the direction of flow, and a cover covering the margins of the flow bed (10) and the bed itself, and having electrode chambers (13) that are etched or machined into the plate-shaped body (8) at both sides and parallel to the direction of flow and to the direction in which the flow bed (10) extends, wherein the electrode chambers (13) are connected to a current source (13a) and there are arranged between the flow bed (10) and the electrode chambers (13) fine channels (14), which are arranged adjacent to one another and extend transversely to the direction of flow and to the direction in which the flow bed (10) extends.

2. An apparatus according to claim 1, wherein the cover covering the margins of the flow bed (10) and the electrode chambers (13) and the channels (14) connecting them is a plate (9), especially a smooth plate, which - for example by the action of heat, by bonding, by sticking or by fusing or the like - is joined to the body (8) comprising the flow bed (10).

3. An apparatus according to either claim 1 or claim 2, wherein the planar flow bed (10) has a length in the direction of flow of the substrate of from approximately 1 mm to approximately 50 mm or approximately 60 mm or optionally approximately 100 mm and a width between approximately 0.1 mm and approximately half a centimeter or approximately one centimeter or inbetween and the depth of the flow bed (10) is from approximately 1 micrometer to approximately 50 micrometers or 100 micrometers.

4. An apparatus according to any one of claims 1 to 3, wherein the inlet and the outlet each comprises channels (15) from approximately 1 micrometer to approximately 100 micrometers wide and/or deep.

5. An apparatus according to any one of claims 1 to 4, wherein the cross-section of the channels (14) that extend transversely to the flow bed (10) and join the flow bed (10) to the electrode chambers (13) is smaller than that of the inlet and outlet channels (15) and, especially, is so small that, apart from the voltage transmission, there is virtually no transport of material through the channels (14).

6. An apparatus according to any one of claims 1 to 5, wherein the transversely extending channels (14) are arranged in parallel and directly adjacent to one another along the flow bed (10), especially at right angles to the orientation of the flow bed (10) and of the electrode chambers (13), and their length especially corresponds approximately to the width of the electrode chambers (13) or is shorter than that width.

7. An apparatus according to any one of claims 1 to 6, wherein the channel-shaped electrode chambers (13) have supply channels (17) or discharge channels (19) to enable continuous washing, which are especially machined or etched into the body (8) comprising the flow bed (10) and are covered by the cover (9).

8. An apparatus according to any one of claims 1 to 7, wherein the inlet channels (15) which, especially, are also etched or machined into the body, are connected to at least one inlet (5) for carrier liquid (2) and are each oriented upstream of the flow bed (10) in the direction of flow, and the outlet channels (15) are oriented downstream of the flow bed (10) in the direction of flow.

9. An apparatus according to any one of claims 1 to 8, wherein a sample inlet (6) is connected by way of a supply line (21) to one or several inlet channels (15) especially away from the longitudinal centre line of the flow bed (10).

10. An apparatus according to any one of claims 1 to 9, wherein a sample outlet line (22) is connected to outlet channels (15) and is arranged as a direct extension of the sample inlet line or lines (21) or, especially for zone electrophoresis, opposite the sample inlet on the other side of the longitudinal centre line of the flow bed (10).

## Revendications

1. Appareil (1) pour la préparation ou l'obtention d'échantillons, en particulier aux fins d'analyse, à partir d'un liquide et/ou en employant un liquide porteur, comportant un lit fluidisé plat (10), que l'on a usiné, dans un corps (8) en forme de plaque, par voie mécanique ou attaque chimique, qui présente, à des extrémités opposées l'une à l'autre dans le sens de l'écoulement, au moins une entrée (5,6) et une sortie (11,12) et qui a un couvercle qui recouvre les bords du lit fluidisé (10) et le lit fluidisé (10), et comportant aussi des espaces-électrodes (13) qui sont usinés, par voie mécanique ou par attaque chimique, dans le corps (8) en forme de plaque, des deux côtés, parallèlement à la direction de l'écoulement et à la direction d'extension du lit fluidisé (10), caractérisé par le fait que les espaces-électrodes (13) sont reliés à une source de courant (13a) et qu'entre le lit fluidisé (10) et les espaces-électrodes (13), sont disposés respectivement l'un à côté de l'autre de fins canaux (14) orientés perpendiculairement à la direction de l'écoulement et à la direction d'extension du lit fluidisé (10).

2. Appareil selon la revendication 1, caractérisé par le fait que le couvercle qui recouvre les bords du lit fluidisé (10) et les espaces-électrodes (13) ainsi que les canaux (14) qui les relient, est une plaque (9), en particulier lisse, qui - par exemple, sous l'action de la chaleur, par bonding/soudage, par collage, par fusion ou analogues - est reliée au corps (8) qui contient le lit fluidisé (10).

3. Appareil selon la revendication 1 ou 2, caractérisé par le fait que le lit fluidisé plat (10) a, selon la direction de l'écoulement du substrat, une longueur d'environ 1 mm jusqu'à environ 50 mm ou environ 60 mm ou éventuellement environ 100 mm et que sa largeur se situe entre environ 0,1 mm et environ un demi-centimètre ou environ 1 cm ou a une valeur intermédiaire et que la profondeur du lit fluidisé (10) vaut environ 1 micromètre jusqu'à environ 50 micromètres ou 100 micromètres.

4. Appareil selon l'une des revendications 1 à 3, caractérisé par le fait que l'entrée et la sortie présentent chacune des canaux (15) d'une largeur et/ou d'une profondeur d'environ 1 micromètre jusqu'à environ 100 micromètres.

5. Appareil selon l'une des revendications 1 à 4, caractérisé par le fait que la section des canaux (14), orientés perpendiculairement au lit fluidisé (10) et prévus pour la liaison du lit fluidisé (10) avec les espaces-électrodes (13) est inférieure à celle des canaux d'entrée et des canaux de sortie (15) et en particulier suffisamment petite pour qu'en dehors du transfert de tension, aucun transport de masse ne se produise pratiquement à travers les canaux (14).

6. Appareil selon l'une des revendications 1 à 5, caractérisé par le fait que les canaux (14) orientés perpendiculairement sont immédiatement voisins l'un de l'autre le long du lit fluidisé (10) et parallèles, en particulier sont orientés perpendiculairement à l'orientation du lit fluidisé (10) et des espaces-électrodes (13), et que leur longueur correspond en particulier à peu près à la largeur des espaces-électrodes (13) ou est plus courte que cette largeur.

7. Appareil selon l'une des revendications 1 à 6, caractérisé par le fait que les espaces-électrodes (13) en forme de canaux présentent, pour un arrosage permanent, des canaux d'amenée (17) ou des canaux d'évacuation (9) qui sont usinés par voie mécanique ou par attaque chimique, en particulier dans le corps (8) contenant le lit fluidisé (10), et sont recouverts par le couvercle (9).

8. Appareil selon l'une des revendications 1 à 7, caractérisé par le fait que les canaux d'entrée (15), en particulier également usinés par voie mécanique ou par attaque chimique, sont reliés à au moins une entrée (5) pour liquide porteur (2) et sont chacun orientés selon la direction de l'écoulement en avant du lit fluidisé (10) et que les canaux de sortie (15) sont orientés selon la direction de l'écoulement en arrière du lit fluidisé (10).

9. Appareil selon l'une des revendications 1 à 8, caractérisé par le fait qu'une entrée des échantillons (6) est reliée, par l'intermédiaire d'un canal d'amenée (21), avec un canal d'entrée (15), ou avec peu de canaux d'entrée (15), en particulier en dehors de l'axe longitudinal du lit fluidisé (10).

10. Appareil selon l'une des revendications 1 à 9, caractérisé par le fait qu'un canal de sortie des échantillons (22) est relié à des canaux de sortie (15) et qu'il est disposé dans le prolongement direct du ou des canaux d'entrée des échantillons (21) ou, en particulier pour une électrophorèse de zones, de l'autre côté de l'axe longitudinal du lit fluidisé (10) par rapport à l'entrée des échantillons.
